# EUROPÄISCHE PATENTANMELDUNG

(11) **EP 2 353 352 A1**
(43) Veröffentlichungstag der Anmeldung: **10.08.2011**
(21) Anmeldenummer: 11152308.0
(22) Anmeldetag: 27.01.2011
(51) Int. Cl.: A01B 59/06

(54) **Universeller Transportanhänger**

(30) Priorität: 28.01.2010 DE 202010001523 U
(71) Anmelder: Miller, Werner, 89429 Bachhagel (DE)
(72) Erfinder: Miller, Werner, 89429 Bachhagel (DE)
(74) Vertreter: Schmid, Wolfgang

(57) **Zusammenfassung**

Die Erfindung betrifft einen Transportanhänger (1) für Kraftfahrzeuge mit wenigstens einer Radachse (2), einer Zugdeichsel (3) und einem mit der Zugdeichsel (3) verbundenen U-förmigen Grundrahmen (4) mit zwei Längsträgern (4a,4b), die wenigstens durch einen vorderen Querträger (4c) miteinander verbunden sind, wobei der U-förmige Grundrahmen (4) auf seine der Zugdeichsel (3) abgewandten Rückseite (4d) wenigstens während bestimmter Betriebzustände des Transportanhängers (1) offen ist und die wenigstens eine Radachse (2) als jeweils an beiden Längsträgern (4a,4b) gegenüberliegend angeordnete eine oder mehrere Radhalbachsen (2a,2b) aufweist, gekennzeichnet durch eine insbesondere an dem U-förmigen Grundrahmen (4) angeordnete hebe- und senkbare Dreipunktanbaueinrichtung (8), welche zwei Unterlenkerfanghaken (8a,8b) und einen Oberlenker (8c) aufweist, zum lösbaren Anbau eines mit einer an die Dreipunktanbauanordnung (8) angepassten Befestigungseinrichtung (9) versehenen, vorzugsweise land- oder forstwirtschaftlichen, Geräts (10) zwischen den Längsträgern (4a,4b) des offenen U-förmigen Grundrahmens (4).

## Beschreibung

Die Erfindung betrifft einen Transportanhänger für Kraftfahrzeuge mit wenigstens einer Radachse, einer Zugdeichsel und einem mit der Zugdeichsel verbundenen U-förmigen Grundrahmen mit zwei Längsträgern, die wenigstens durch einen vorderen Querträger miteinander verbunden sind, wobei der U-förmige Grundrahmen auf seiner der Zugdeichsel abgewandten Rückseite wenigstens während bestimmter Betriebzustände des Transportanhängers offen ist und die wenigstens eine Radachse als jeweils an beiden Längsträgern gegenüberliegend angeordnete eine oder mehrere Radhalbachsen aufweist.

Ein derartiger Transportanhänger ist aus der DE 20 2005 007 723 U1 bekannt. Dort ist ein Einachsenfahrgestell für den Transport von Wechselaufbauten oder dergleichen mit einem Rahmen zur lösbaren Halterung der Wechselaufbauten angegeben, wobei der Rahmen zwei Längsholme aufweist, die durch einen vorderen Querträger miteinander verbunden sind, und wobei unter jedem Längsholm je ein Rad federnd gelagert ist.

Aus dem Stand der Technik sind des weiteren Dreipunktanbaueinrichtungen für Schlepper oder Zugfahrzeuge bekannt, um land- Oder forstwirtschaftliche Geräte anzukoppeln. Derartige land- oder forstwirtschaftliche Geräte sind dazu mit einer entsprechenden Schnittstelle versehen, welche mit der Dreipunktanbaueinrichtung verbunden werden kann. Zum Transport wird das Gerät zumeist hydraulisch angehoben. Eine derartige Dreipunktanbaueinrichtung mit einem Oberlenker und zwei Unterlenkern bzw. Unterlenkerfanghaken ist in der DE 10 2005 017 578 A1 angegeben. Als land- oder forstwirtschaftliche Geräte kommen beispielsweise Holzspalter oder Brennholzkreissägen in Betracht.

Insbesondere bei der Herstellung von Spaltholz ist es wünschenswert, das vor Ort, insbesondere im Wald, mit einem Holzspalter gespaltene Holz bzw. mit der Brennholzsäge gesägte Holz gleichzeitig mit dem Gerät abtransportieren zu können. Hierbei ergibt sich jedoch oftmals das Problem, dass nach der Ankopplung des land- oder forstwirtschaftlichen Geräts an die Zugmaschine bzw. den Schlepper oder Traktor dieser nicht mehr mit einem Anhänger zur Beladung mit dem Spaltholz bzw. Brennholz versehen werden kann und somit Strecken mehrfach oder mit unterschiedlichen Fahrzeugen zum Transport des Arbeitsgeräts und des Brennholzes gefahren werden müssen.

Aus der DE 94 19 074 U1 ist ein Holzspaltgerät mit einer Anschlaghaltevorrichtung für Meterholz bekannt, welche eine Anbauvorrichtung für ein Dreipunkt-Hubwerk aufweist.

Schließlich ist in der DE 200 10 015 U1 ein mobiler Holzspalter angegeben, bei welchem das Spaltwerkzeug auf einem Anhänger fest montiert ist. Nachteilig ist dabei, dass Holzspalter und Anhänger eine feste Einheit bilden und somit keine unterschiedlichen land- oder forstwirtschaftlichen Geräte transportierbar sind. Zudem sind keine Mittel vorgesehen, um den Anhänger an unterschiedlichen Kraftfahrzeugen mit unterschiedlichen maximalen Stützlasten anzukoppeln. Weitere derartige mobile Holzspalter sind ebenfalls aus dem Stand der Technik bzw. der Praxis bekannt.

Der vorliegenden Erfindung liegt die Aufgabe zugrunde, einen Transportanhänger für Kraftfahrzeuge der eingangs erwähnten Art zu schaffen, welcher universell, insbesondere für den Transport von unterschiedlichen land- und forstwirtschaftlichen Geräten einsetzbar ist.

Diese Aufgabe wird erfindungsgemäß durch einen Transportanhänger für Kraftfahrzeuge gelöst, mit wenigstens einer Radachse, einer Zugdeichsel und einem mit der Zugdeichsel verbundenen U-förmigen Grundrahmen mit zwei Längsträgern, die wenigstens durch einen vorderen Querträger miteinander verbunden sind, wobei der U-förmige Grundrahmen auf seiner der Zugdeichsel abgewandten Rückseite wenigstens während bestimmter Betriebzustände des Transportanhängers offen ist bzw. geöffnet werden kann und die wenigstens eine Radachse als jeweils an beiden Längsträgern gegenüberliegend angeordnete eine oder mehrere, insbesondere gefederte, Radhalbachsen aufweist, gelöst, gekennzeichnet durch eine, insbesondere an dem U-förmigen Grundrahmen angeordnete, hebe- und senkbare Dreipunktanbaueinrichtung, welche zwei Unterlenkerfanghaken und einen Oberlenker aufweist, zum lösbaren Anbau bzw. zur lösbaren Halterung eines mit einer an die Dreipunktanbaueinrichtung angepassten Befestigungseinrichtung versehenen, vorzugsweise land- oder forstwirtschaftlichen, Geräts zwischen den Längsträgern des offenen, U-förmigen Grundrahmens. Offen bedeutet im vorliegenden Fall, dass der U-förmige Grundrahmen auf seiner der Zugdeichsel abgewandten Rückseite in bestimmten Betriebszuständen, beispielsweise während der Fahrt, insbesondere zur Sicherung, selbstverständlich auch mit einer lösbar verbundenen Querstange oder dergleichen versehen und damit sozusagen geschlossen sein kann. Eine derartige Querstange kann insbesondere ohne Tragkraft ausgeführt sein.

Durch die erfindungsgemäßen Maßnahmen wird ein universell einsetzbarer Transportanhänger für Kraftfahrzeuge geschaffen, bei welchem unterschiedlichste land- oder forstwirtschaftliche Geräte in dem U-förmigen Grundrahmen an der Dreipunktanbaueinrichtung ankoppelbar sind. Darüber hinaus kann auch ein zusätzlicher Anhänger zwischen das Zugfahrzeug bzw. den Schlepper und den erfindungsgemäßen Transportanhänger zwischengeschaltet werden. Der erfindungsgemäße Transportanhänger kann sowohl an eine PKW-Anhängerkupplung als auch an ein Zugmaul eines Lastkraftwagens angekoppelt werden. Der erfindungsgemäße Transportanhänger weist für einen sicheren Transport des land- oder forstwirtschaftlichen Geräts eine Dreipunktanbaueinrichtung bzw. eine Dreipunkthydraulik auf. Für den Transportanhänger sind dabei Traglasten zwischen 1 kg und ca. 3.000 kg denkbar. Die Breite des Anhängers kann zwischen ca. 1,5 m bis ca. 2,55 m liegen, wobei die Länge im Bereich von ca. 1 m bis ca. 5 m liegen kann. Der Transportanhänger kann als Ein-, Zwei- bzw. Tandem- ,Drei- oder Vierachser, insbesondere mit Zwillingsbereifung, mit oder ohne Achslenkung bzw. mit oder ohne Drehschemel ausgeführt sein. Des weiteren können die Achsen gebremst oder ungebremst sein. Zudem kann als Anfahrtshilfe ein, insbesondere externer Achsantrieb hydraulisch, pneumatisch oder als Riemenantrieb vorgesehen sein. Der Transportanhänger kann Staplerhubgerüste, Hubvorrichtungen für Gitterboxen, Paletten oder Futtermittelbehälter sowie Aufnahmen für Kabeltrommeln aufweisen. Darüber hinaus ist es denkbar den Transportanhänger mit einem Düngerstreuer (auch für den Winterdienst), Schneckenkornstreuer, Granulatstreuer oder dergleichen mit hydraulischem, pneumatischem oder elektrischem Antrieb zu bestücken. Dabei kommen Fassungsvermögen von ca. 20 kg bis ca. 2.000 kg in Betracht. Rüttelplatten, Betonmischer und andere Baumaschinen können ebenfalls transportiert werden. In vorteilhafter Weise ist der Transportanhänger auch mit Ladung, d. h. dem Gerät, ohne Einsatz des Zugfahrzeugs manuell rangierbar. Dies ermöglicht beispielsweise ein Rangieren in engen Räumen. Der Transportanhänger kann beispielsweise - auch in Verbindung mit dem Arbeitsgerät - für eine Geschwindigkeit von 100 km/h zugelassen sein.

Erfindungsgemäß kann ferner vorgesehen sein, dass die Lastverteilung des Transportanhängers zwischen Heck- und Frontlastigkeit variabel einstellbar ist. Dadurch wird es ermöglicht, dass der Transportanhänger auf unterschiedlichste Zugmaschinen bzw. Kraftfahrzeuge unter Berücksichtigung von unterschiedlichsten zu transportierenden Geräten angepasst wird. So kann beispielsweise durch Einstellung einer Hecklastigkeit auch ein schweres Arbeitsgerät mit einem einfachen Personenkraftwagen (z. B. mit einer Stützlast von 50 kg) kombiniert werden.

Vorteilhaft ist es, wenn die Position der Unterlenkerfanghaken der Dreipunktanbaueinrichtung, insbesondere mittels eines Lochsegments variabel in Richtung der Längsachse des Transportanhängers einstellbar ist. Sonach kann die Balance zwischen Heck- und Frontlastigkeit jeweils vom Anwender individuell ohne große Fachkenntnisse und Spezialkwerkzeug eingestellt werden. Durch das Lochsegment bzw. entsprechend einbringbare Verriegelungsbolzen oder dergleichen kann die Dreipunktanbaueinrichtung und damit das anzuhängende Gerät innerhalb des Anhängers verstellt werden, wodurch sich eine Front- oder Hecklastigkeit einstellen lässt.

Die Position des Oberlenkers der Dreipunktanbaueinrichtung kann ebenfalls, insbesondere mittels eines zusätzlichen Lochsegments, variabel einstellbar sein.

Ein Turm der Dreipunktanbaueinrichtung kann zweiteilig ausgebildet sein, um eine Motor- oder Gelenkwelle in einfacher Weise an das Arbeitsgerät heranführen zu können.

Erfindungsgemäß kann ferner vorgesehen sein, dass die Position der Radhalbachsen auf den Längsträgern des U-förmigen Grundrahmens jeweils variabel in Richtung der Längsachse des Transportanhängers einstellbar ist. Alternativ oder zusätzlich zur Einstellbarkeit der Position der Unterlenkerfanghaken können auch die Radhalbachsen entlang der Längsachse des Transportanhängers variabel anordenbar sein, um eine entsprechende Lastverteilung zwischen Heck- und Frontlastigkeit des Anhängers zu erreichen. Sonach kann die Anhängerstützlast für unterschiedliche Zugfahrzeuge in Abhängigkeit von dem Gewicht des zu transportierenden land- oder forstwirtschaftlichen Geräts eingestellt werden. Darüber hinaus kann, falls der Transportanhänger entsprechende Abstellfüße aufweist, dieser hochkant beispielsweise an einer Wand aufgestellt werden, um Platz zu sparen. Dann besteht zudem die Möglichkeit, die Radhalbachsen möglichst weit hinten zu positionieren, wodurch der Kipp- bzw. Drehpunkt ebenfalls nach unten bzw. hinten verschoben wird.

Vorteilhaft ist es, wenn die Radhalbachsen jeweils mittels eines Trägerprofils über eine Klemmvorrichtung oder mittels eines Verschiebeschlittens über Steckbolzen und entsprechende angepasste Bohrungen auf den Längsträgern des U-förmigen Grundrahmens lösbar fixierbar sind. Dadurch wird eine einfache Möglichkeit zur lösbaren Befestigung der Radhalbachsen auf den Längsträgern geschaffen.

In einer konstruktiven Ausgestaltung der Erfindung kann ferner vorgesehen sein, dass die Trägerprofile mittels einer Kurbelspindel oder hydraulisch auf den Längsträgern des U-förmigen Grundrahmens verschiebbar und insbesondere mittels Schrauben lösbar fixierbar sind. Die Verschiebung der Radhalbachsen kann über eine manuell bedienbare Kurbelspindel oder eine zusätzliche Hydraulikeinrichtung mit einem Hydraulikzylinder erfolgen. Die Trägerprofile sind mit Schrauben oder dergleichen lösbar auf den Längsträgern fixierbar, d. h. die Schrauben müssen gelöst werden, um die Kurbelspindel bedienen zu können. Anschließend müssen die Schrauben wieder festgezogen werden. Somit weisen die Radhalbachsen eine Sicherheitsvorrichtung gegen unbeabsichtigtes horizontales Lösen bzw. Verschieben auf. Durch diese Maßnahmen ist eine Einstellung der Ausbalancierung des Transportanhängers ohne Spezialwerkzeug und ohne große Fachkenntnis individuell durch den Anwender möglich. Selbstverständlich sollten die Radhalbachsen in Längsrichtung des Transportanhängers gegenüberliegend, d. h. horizontal auf gleicher Höhe der Längsträger positioniert werden. Dies kann über Maßleisten mit Zeigeelementen, welche beidseitig an den Verschiebachsen angeordnet sind, erreicht werden.

Vorteilhaft ist es außerdem, wenn die Dreipunktanbaueinrichtung an die Befestigungseinrichtung des land- oder forstwirtschaftlichen Geräts anpassbar ist. Dadurch ist es möglich, land- oder forstwirtschaftliche Geräte mit unterschiedlichen Dreipunktbefestigungen zu transportieren. Die Dreipunktbefestigungen sind standardisiert, je nach Größe der Zugmaschine werden sie in die Kategorien 1 bis 4 eingeteilt. Dazu kann der Abstand zwischen den an einer mit dem U-förmigen Grundrahmen verbundenen Traverse angeordneten Unterlenkerfanghaken der Dreipunktanbaueinrichtung horizontal in einer Richtung senkrecht zur Längsachse des Transportanhängers variabel einstellbar sein.

Vorteilhaft ist es, wenn der offene, U-förmige Grundrahmen wenigstens eine Einrichtung zur Aufnahme einer insbesondere kippbaren Ladeplattform oder einer mit der Ladeplattform verbindbaren Aufnahmeeinrichtung aufweist. Dadurch kann der Transportanhänger auch mit einer Ladeplattform bzw. Anhänger- oder Wechselbrücke versehen werden, wenn kein land- oder forstwirtschaftliches Gerät zu transportieren ist. Die Anhängerbrücke kann dann in einfacher Weise auf dem U-förmigen Grundrahmen befestigt werden. Somit ist auch eine Ganzjahresnutzung oder Mehrfachnutzung des Transportanhängers möglich. Die Ladeplattform kann wechselbar ausgeführt sein. Die Ladeplattform kann darüber hinaus auch kippbar ausgebildet sein. Vorzugsweise weist die Ladeplattform vier Bordwände auf, von denen drei seitlich abklappbar sind. Für den Anbau der Ladeplattform kann auch ein Zwischenrahmen oder dergleichen vorgesehen sein. Zum Anbau der Ladeplattform kann die Dreipunktanbaueinrichtung wenigstens teilweise, insbesondere über ein Scharnier oder dergleichen wegklappbar oder abklappbar ausgebildet sein.

Das land- oder forstwirtschaftliche Gerät kann ein Holzspalter oder eine Brennholzkreissäge sein. Es kommen auch Häcksler, sonstige Holzbearbeitungsmaschinen, selbstfahrende Geräte und Geräte für den Garten- und Landschaftsbau, den Winterdienst, sowie Baugeräte wie Rüttelplatten, Betonmischer usw. in Betracht.

Sehr vorteilhaft ist es, wenn die Dreipunktanbaueinrichtung mittels einer Hydraulikeinrichtung mit einfacher oder doppelter Wirkrichtung, vorzugsweise manuell, insbesondere über eine Handpumpe, hebe- und senkbar ist. Die Hydraulikeinrichtung kann auch einen Anschluss an eine externe Hydraulik der Zugmaschine aufweisen oder als eigene Bordhydraulik ausgebildet sein. Des weiteren könnte die Hydraulikeinrichtung auch mit einer Kupplungseinrichtung versehen sein, um alternativ oder zusätzlich auch eine Kippvorrichtung für die Ladeplattform damit betreiben zu können. Durch den Einsatz einer doppelwirkenden Hydraulikfunktion ist beispielsweise ein Radwechsel bei dem Transportanhänger ohne Wagenheber möglich, indem der Holzspalter sozusagen auf den Untergrund gedrückt wird. Aufgrund der insbesondere dadurch erreichten Standsicherheit des Holzspalters bzw. land- oder forstwirtschaftlichen Geräts könnte dieses auch im Transportanhänger betrieben werden. Der Antrieb des land- oder forstwirtschaftlichen Geräts kann dann etwa mittels eines Elektromotors erfolgen. Die Dreipunktaufnahme kann über eine eigene Bordhydraulik manuell insbesondere über eine Handpumpe hebe- und senkbar ausgestattet sein. Um das zu transportierende Gerät bzw. den Holzspalter ohne Hilfe von Spezial- und/oder handelsüblichem Werkzeug an- und abbauen zu können, sollte eine Hubhöhe von mindestens 220 mm über dem Boden/Straßenbelag vorhanden sein. Darüber hinaus sollte eine Transportsicherung an der Dreipunktaufhängung vorgesehen sein, um während der Straßenfahrt die Bordhydraulik zu entlasten bzw. ein Absenken in vertikaler Richtung während der Fahrt unmöglich zu machen. Pneumatische, hydraulische oder öldruckgesteuerte Ausführungen kommen in Betracht. Alternativ zu einer Hydraulikeinrichtung könnte die Dreipunktanbaueinrichtung auch mittels einer Seilhebevorrichtung, eines Hebelmechanismus bzw. Bowdenzugs, sonstiger Seilmechanismen oder dergleichen (wie etwa Ratsche, Seilwinde, Gurte, Steckverbindungen, usw.) hebe-und senkbar sein.

Der U-förmige Grundrahmen, insbesondere die Längsträger können, vorzugsweise mittels eines Drehgelenks zwischen deren Teilabschnitten , zweiteilig ausgebildet sein.

Vorteilhafte Ausgestaltungen und Weiterbildungen der Erfindung ergeben sich aus den Unteransprüchen. Nachfolgend sind anhand der Zeichnungen prinzipmäßig Ausführungsbeispiele der Erfindung angegeben.

Es zeigt:
- Figur 1: eine perspektivische Ansicht eines erfindungsgemäßen Transportanhängers für Kraftfahrzeuge;
- Figur 2: eine perspektivische Ansicht des erfindungsgemäßen Transportanhängers mit angebautem Holzspalter;
- Figur 3: eine vereinfachte seitliche Ansicht des erfindungsgemäßen Transportanhängers mit abgekoppeltem Holzspalter;
- Figur 4: eine vereinfachte seitliche Ansicht des erfindungsgemäßen Transportanhängers mit angekoppeltem Holzspalter;
- Figur 5: eine vereinfachte Ansicht des erfindungsgemäßen Transportanhängers von unten;
- Figur 6: eine perspektivische Ansicht einer weiteren Ausführungsform des erfindungsgemäßen Transportanhängers;
- Figur 7: eine schematische Darstellung einer weiteren Möglichkeit zur Befestigung einer Verschiebeachse für einen erfindungsgemäßen Transportanhänger;
- Figur 8: eine schematische Darstellung einer weiteren Ausführungsform des erfindungsgemäßen Transportanhängers;
- Figur 9: eine schematische Darstellung der Ausführungsform aus Figur 8 in einer Draufsicht;
- Figur 10: eine schematische Darstellung der Ausführungsform aus Figur 8 in einer Seitenansicht bei einem ersten Absenkschritt des Transportanhängers;
- Figur 11: eine schematische Darstellung der Ausführungsform aus Figur 8 bei einem zweiten Absenkschritt des Transportanhängers;
- Figur 12: eine vereinfachte Darstellung einer weiteren Ausführungsform des erfindungsgemäßen Transportanhängers;
- Figur 13: eine vereinfachte Darstellung der Ausführungsform aus Figur 12 bei dem Absenken des Transportanhängers;
- Figur 14: eine schematische Darstellung einer weiteren Ausführungsform des erfindungsgemäßen Transportanhängers;
- Figur 15: eine weitere vereinfachte Darstellung der Ausführungsform des erfindungsgemäßen Transportanhängers aus Figur 14;
- Figur 16: eine vereinfachte Darstellung einer weiteren Ausführungsform des erfindungsgemäßen Transportanhängers; und
- Figur 17: eine vereinfachte Darstellung der Ausführungsform aus Figur 15 bei dem Absenken des Transportanhängers.

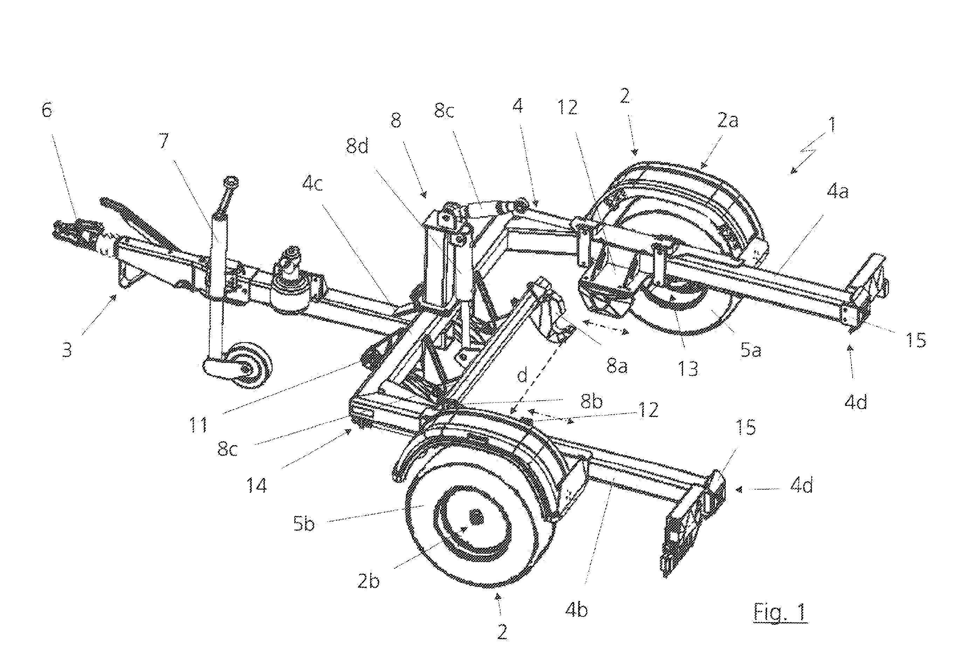

In Fig. 1 ist ein erfindungsgemäßer Transportanhänger 1 für Kraftfahrzeuge (nicht dargestellt) mit einer Radachse 2 und einer Zugdeichsel 3 dargestellt. In weiteren, nicht dargestellten Ausführungsbeispielen könnten selbstverständlich auch zwei Radachsen 2 nebeneinander vorgesehen sein. Des weiteren weist der Transportanhänger 1 einen mit der Zugdeichsel 3 verbundenen U-förmigen Grundrahmen 4 mit zwei Längsträgern 4a, 4b, die durch einen vorderen Querträger 4c miteinander verbunden sind, auf. Der U-förmige Grundrahmen 4 besitzt zwei parallel zueinander angeordnete Längsholme oder Längsträger 4a, 4b, die durch einen Querholm oder Querträger 4c miteinander verbunden sind. Die beiden Längsträger 4a, 4b verlaufen senkrecht zum Querträger 4c, alle drei Träger 4a, 4b, 4c befinden sich jedoch wenigstens annähernd in derselben Ebene. Der U-förmige Grundrahmen 4 ist auf seiner der Zugdeichsel 3 abgewandten Rückseite 4d offen. Die Radachse 2 weist zwei Räder 5a, 5b auf. Die Radachse 2 ist nicht durchgehend und weist jeweils an beiden Längsträgern 4a, 4b gegenüberliegend angeordnete Radhalbachsen 2a, 2b auf. Diese können in weiteren nicht dargestellten Ausführungsbeispielen in einfacher Weise auch als, insbesondere angeschweißte Radnaben ausgeführt sein. Die Radhalbachsen 2a, 2b der beiden Räder 5a, 5b sind jedoch in einer Linie anordenbar, so dass sich beide Räder 5a, 5b gleichmäßig und gleichzeitig drehen, sofern keine Rangier- oder Kurvenfahrten vorgenommen werden. Die Zugdeichsel 3 des Transportanhängers 1 weist eine für eine nicht dargestellte Anhängerkupplung eines Kraftfahrzeugs geeignete Anhängevorrichtung 6 (Kugelkopf) auf. Diese kann selbstverständlich auch derart ausgebildet sein, dass sie mit einem Zugmaul eines Lastkraftwagens verbindbar ist (Öse). In weiteren, nicht dargestellten Ausführungsbeispielen kann die Zugdeichsel 3 höhenverstellbar und/oder wenigstens teilweise einklappbar bzw. abklappbar sein, so dass der Transportanhänger 1 bei der Lagerung weniger Platz in Anspruch nimmt (nicht dargestellt). Da es sich bei der Zugdeichsel 3 ansonsten um eine bekannte Ausführung handelt, wird nachfolgend nicht näher darauf eingegangen.

In Fahrtrichtung vor den Rädern 5a, 5b ist an der Zugdeichsel 3 eine höhenverstellbare Stütze 7 angedeutet, damit bei Nichtbenutzung eine Dreipunktlagerung des erfindungsgemäßen Transportanhängers 1 möglich ist. Die Stütze 7 kann sowohl als fester Standfuß als auch als bewegliches Rad sowie hydraulisch oder als Zahnstangenversion ausgeführt sein bzw. komplett entfallen (nicht dargestellt) .

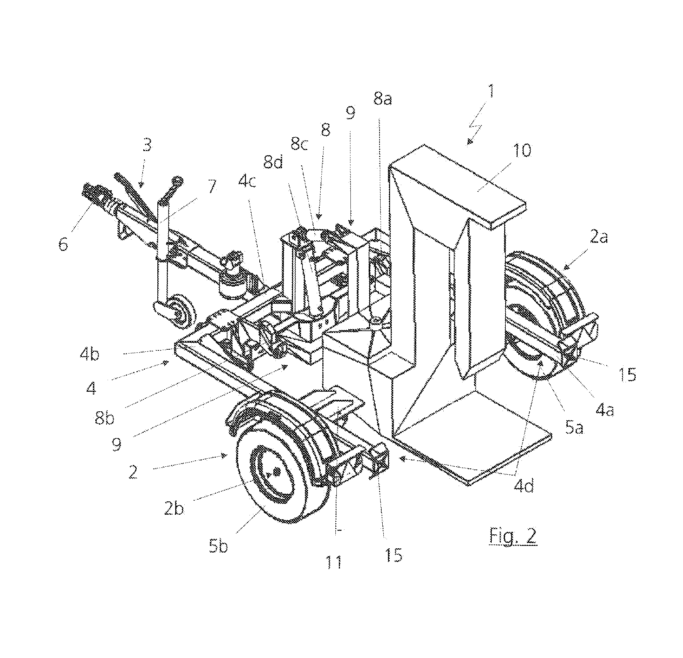

Wie weiter aus Fig. 1 ersichtlich, ist an dem U-förmigen Grundrahmen 4 eine hebe- und senkbare Dreipunktanbaueinrichtung 8 angeordnet, welche zwei Unterlenkerfanghaken 8a, 8b und einen Oberlenker 8c aufweist. Dadurch wird ein lösbarer Anbau eines mit einer an die Dreipunktanbaueinrichtung 8 angepassten Befestigungseinrichtung 9 versehenen, als Holzspalter 10 ausgebildeten land- oder forstwirtschaftlichen Geräts zwischen den Längsträgern 4a, 4b des offenen U-förmigen Grundrahmens 4 ermöglicht (siehe Fig. 2).

In weiteren, nicht dargestellten Ausführungsbeispielen könnte das land- oder forstwirtschaftliche Gerät auch eine Brennholzkreissäge sein. Selbstverständlich kommen noch andere mit einer an die Dreipunktanbaueinrichtung 8 angepassten Befestigungseinrichtung 9 versehene vorzugsweise land- oder forstwirtschaftliche Geräte in Betracht.

Die Dreipunktanbaueinrichtung 8 ist mittels eines Hydraulikzylinders bzw. einer Hydraulikeinrichtung 8d mit doppelter Wirkrichtung, vorzugsweise manuell, insbesondere über eine Handpumpe 16 hebe- und senkbar. Es kommen auch Hydraulikeinrichtungen 8d mit einfacher Wirkrichtung in Frage.

Die Dreipunktanbaueinrichtung 8 ist an die Befestigungseinrichtung 9 des Holzspalters 10 anpassbar. Der Abstand d zwischen den an einer mit dem U-förmigen Grundrahmen 4 verbundenen Traverse 8e angeordneten Unterlenkerfanghaken 8a, 8b der Dreipunktanbaueinrichtung 8 ist horizontal in einer Richtung senkrecht zur Längsachse des Transportanhängers 1 variabel einstellbar (in Fig. 1 durch den gestrichelten Doppelpfeil angedeutet).

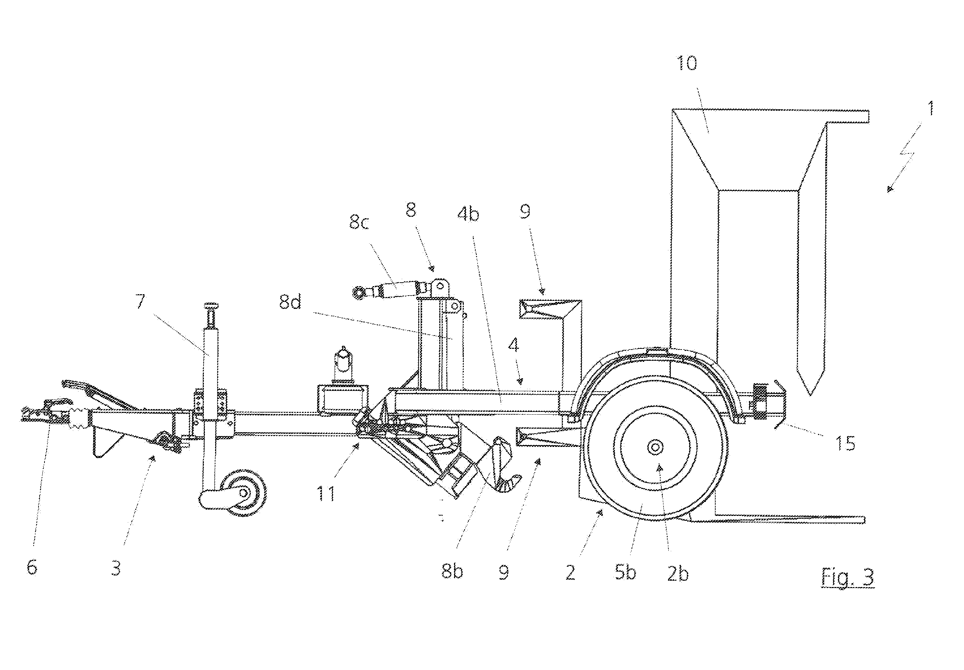

Die Lastverteilung des Transportanhängers 1 zwischen Heck- und Frontlastigkeit ist variabel einstellbar. Die Position der Unterlenkerfanghaken 8a, 8b der Dreipunktanbaueinrichtung 8 ist mittels eines Lochsegments 11 mit unterschiedlich positionierten Aussparungen bzw. Löchern variabel in Richtung der Längsachse des Transportanhängers 1 einstellbar (siehe dazu insbesondere Figuren 3, 4 und 5). Dieses kann variabel schwenkbar ausgestaltet und mit Schrauben oder Bolzen oder dergleichen, welche in das entsprechende Loch einbringbar sind, fixiert werden.

Alternativ oder zusätzlich kann die Position der Radhalbachsen 2a, 2b auf den Längsträgern 4a, 4b des U-förmigen Grundrahmens 4 jeweils variabel in Richtung der Längsachse des Transportanhängers 1 einstellbar sein. Wie aus Fig. 1 ersichtlich, sind die Radhalbachsen 2a, 2b jeweils mittels eines Trägerprofils 12 und einer Klemmvorrichtung 13 auf den Längsträgern 4a, 4b des U-förmigen Grundrahmens 4 lösbar fixierbar. Die Einstellbarkeit in Richtung der Längsachse ist in Fig. 1 durch die Doppelpfeile mit strichpunktierter Linie angedeutet. Die Trägerprofile 12 sind mittels einer Kurbelspindel 14 auf den Längsträgern 4a, 4b des U-förmigen Grundrahmens 4 verschiebbar (beidseitig und unabhängig voneinander) und insbesondere mittels Schrauben (nicht dargestellt) lösbar fixierbar. In weiteren nicht dargestellten Ausführungsbeispielen könnte die Verschiebbarkeit der Radhalbachsen 2a, 2b auch hydraulisch erreicht werden. Ferner kann die Stütze 7 eine Waage mit einem Anzeigeblatt bzw. einer Anzeigenskala aufweisen, auf welchem bzw. welcher wenigstens annähernd die Stützlast der Zugdeichsel 3 auf das Zugfahrzeug abgelesen werden kann. Dies erleichtert die Einstellung der Stützlast über die Heck- und Frontlastigkeit des Transportanhängers 1.

Wie weiter in Figur 1 stark vereinfacht gestrichelt angedeutet, kann der offene U-förmige Grundrahmen 4 eine Einrichtung 18 zur Aufnahme einer insbesondere kippbaren Ladeplattform 19 (teilweise angedeutet) oder einer mit der Ladeplattform 19 verbindbaren Aufnahmeeinrichtung (nicht dargestellt) aufweisen. Die Einrichtung 18 kann erste Aufnahmeelemente 18a zur Auflage der Ladeplattform 19 und zweite Aufnahmeelemente 18b, welche in angepasste Aussparungen 19a der Ladeplattform 19 eingreifen, zur Kippbarkeit der Ladeplattform 19 aufweisen. Auch kann die Dreipunktanbaueinrichtung 8 wenigstens teilweise wegklappbar oder abklappbar ausgebildet sein, damit sie nicht über Kotflügel des Transportanhängers 1 hinausragt. Dies kann über ein optionales Scharnier 17 erreicht werden, wobei der Hydraulikzylinder 8d entsprechend aus dem Oberlenker 8c ausgehängt bzw. entriegelt werden kann. Die Hydraulikpumpe bzw. Handpumpe 16 kann dazu auch auf der gegenüberliegenden Seite der Zugdeichsel 3 oder weiter vorn in Richtung der Anhängevorrichtung 6 angeordnet sein.

Die Ladeplattform 19 kann nach links, nach rechts und nach hinten gekippt werden. Auch kann sie mit Stützfüßen zum Abstellen versehen sein. Die Ladeplattform 19 kann abklappbare Bordwände aus Holz (wasserfest oder nicht wasserfest), Metall, insbesondere Aluminium oder Kunststoff aufweisen. Ebenso können rutschhemmende Verbundplatten oder Faserplatten vorgesehen sein. Der Boden der Ladeplattform 19 kann aus Holz, insbesondere über Nut/Feder-Verbindungen oder Holzdielen sowohl wasserfest als auch nicht wasserfest und/oder rutschhemmend ausgeführt sein. Er kann jedoch auch aus Kunststoff bzw. Blechen aus Metall bzw. Aluminium gebildet sein. Die Ladeplattform 19 kann einen Planenspriegel mit einem nach allen Seiten zu öffnenden Planenaufbau aufweisen. Darüber hinaus können Vorrichtungen zur Ladungssicherheit vorgesehen sein.

Die Einrichtung 18 und die Ladeplattform 19 sind in den Figuren 2 bis 5 nicht dargestellt.

Des weiteren weist der Transportanhänger 1 Abstellfüße 15 auf, mit denen er auch hochkant, beispielsweise an einer Wand oder dergleichen gelagert werden kann. In Fig. 2 ist der Transportanhänger 1 mit einem aufgenommenen Holzspalter 10 dargestellt.

In Fig. 3 ist der Transportanhänger 1 mit einem zwischen den Längsträgern 4a, 4b des U-förmigen Grundrahmens 4 abgestellten Holzspalter 10 gezeigt.

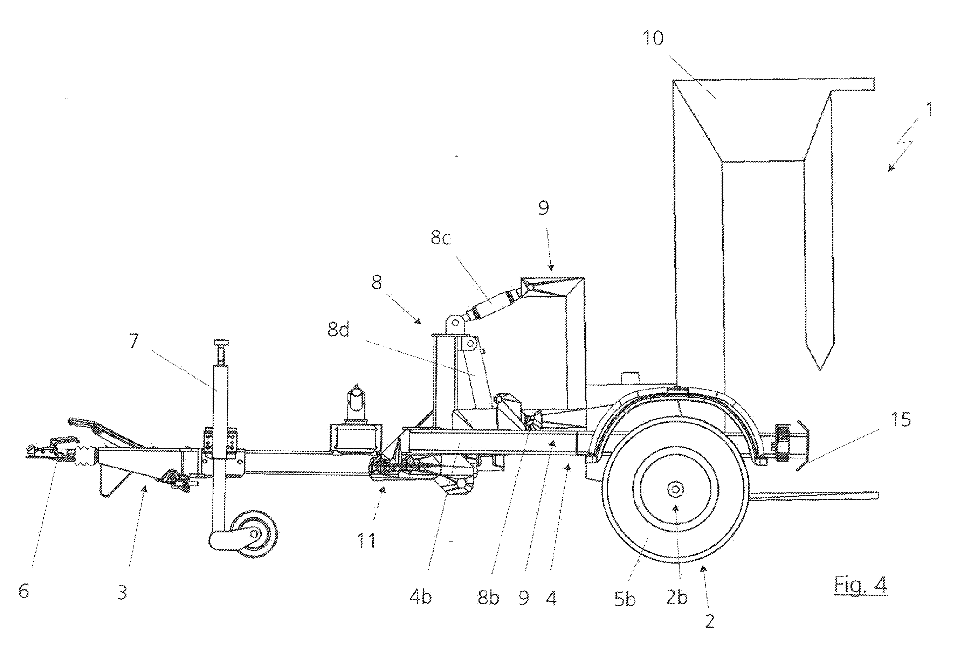

Fig. 4 zeigt den Transportanhänger 1 mit angekoppeltem Holzspalter 10. Da es sich um Seitenansichten handelt, sind nicht alle Elemente des Transportanhängers 1 sichtbar.

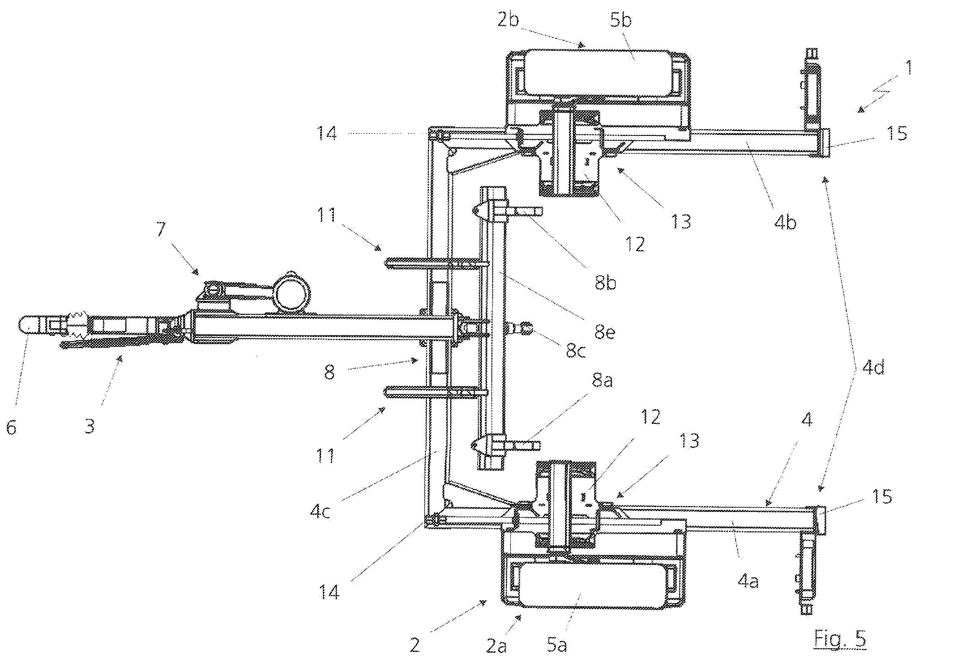

Fig. 5 zeigt den erfindungsgemäßen Transportanhänger 1 in einer Ansicht von unten. Hier sind insbesondere die Kurbelspindel 14, die Klemmvorrichtung 13 und das Trägerprofil 12 genauer dargestellt.

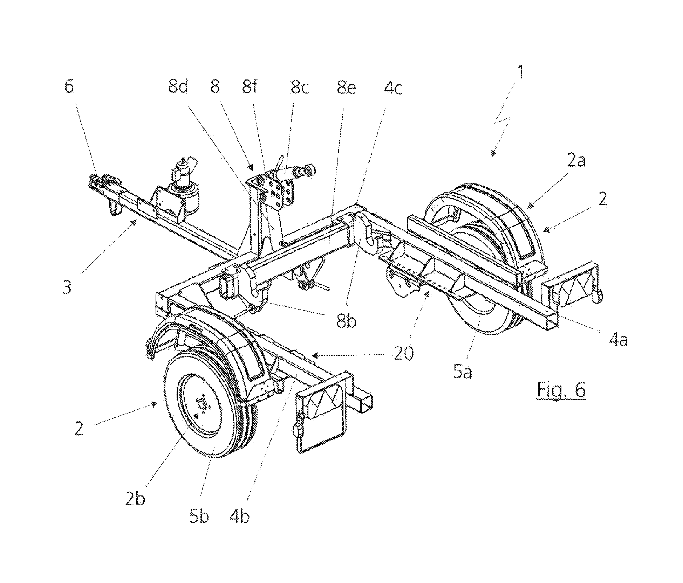

Fig. 6 zeigt den erfindungsgemäßen Transportanhänger 1 in einer weiteren Ausführungsform. Hier ist die Dreipunktanbaueinrichtung 8 zur variablen Positionierung des Oberlenkers 8c zusätzlich mit einem Lochsegment 8f versehen. Des Weiteren sind die Radhalbachsen 2a, 2b an Lochplatten 20 angebracht, welche komplett an die jeweiligen Längsträger 4a, 4b angeschweißt sind.

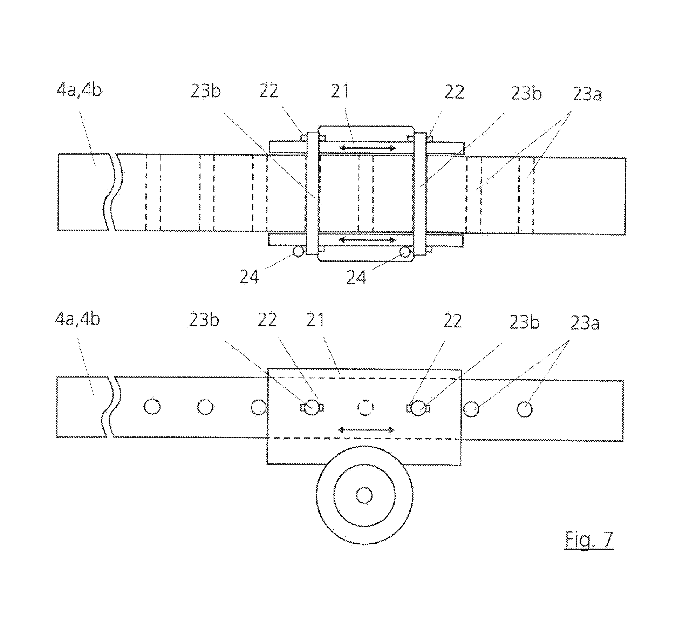

Fig. 7 zeigt eine alternative Möglichkeit zur Befestigung der verschiebbaren Radhalbachsen 2a, 2b. Dabei sind die Radhalbachsen 2a, 2b jeweils an einem Verschiebeschlitten 21 angeordnet, welcher durch Steckbolzen 22, die in entsprechend angepasste Bohrungen 23a der Längsträger 4a, 4b und entsprechend angepasste Bohrungen 23b des Verschiebeschlittens 21 einbringbar sind, fixiert werden können. Die Steckbolzen 22 werden anschließend mit Federsteckern 24 gesichert.

Der U-förmige Grundrahmen kann eine Hubvorrichtung aufweisen, mit welcher ein Heben und ein Absenken des Rahmens erfolgen kann. Dazu können starre Hubarme bzw. Unterlenker vorgesehen sein.

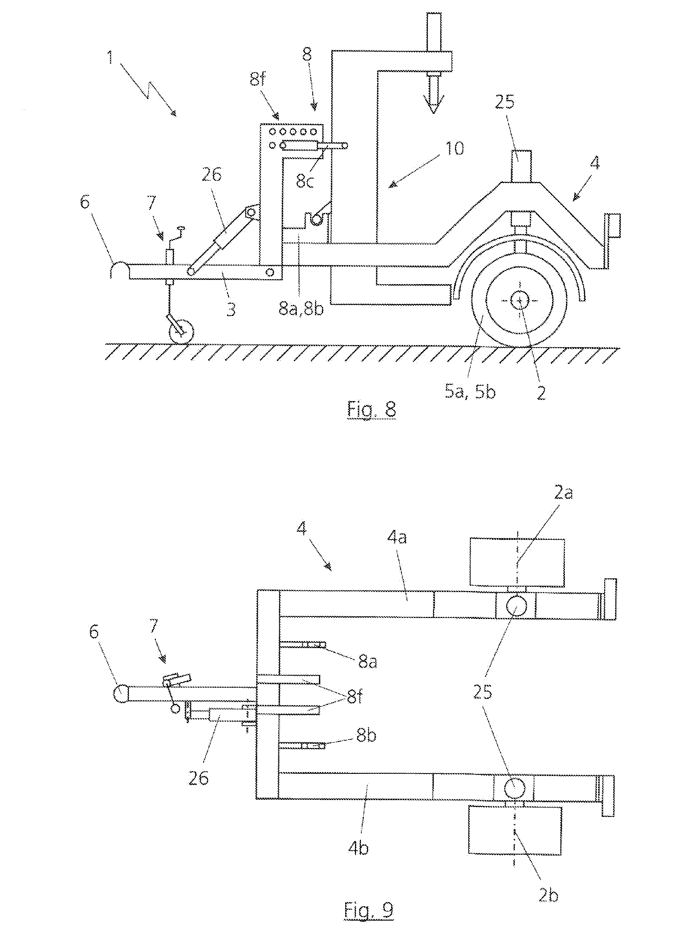

Fig. 8 zeigt eine vereinfachte Darstellung einer weiteren Ausführungsform des Transportanhängers 1, wobei die Räder 5a und 5b jeweils an einem Hydraulikzylinder 25 angebracht sind und auch die Zugdeichsel 3 mit einem weiteren Hydraulikzylinder 26 versehen ist. Die Zugdeichsel 3 ist außerdem an dem U-förmigen Grundrahmen 4 drehbar gelagert. Der hier gezeigte Holzspalter 10 ist in der Darstellung auf dem Transportanhänger 1 befestigt. Die Unterlenker 8a, 8b sind des weiteren nicht mit einem Hydraulikzylinder zu Hubzwecken verbunden.

Fig. 9 zeigt eine vereinfachte Darstellung des Transportanhängers 1 aus Fig. 8 in einer Draufsicht. Zu erkennen ist hierbei insbesondere die geteilte Radachse 2 mit den beiden Radhalbachsen 2a und 2b.

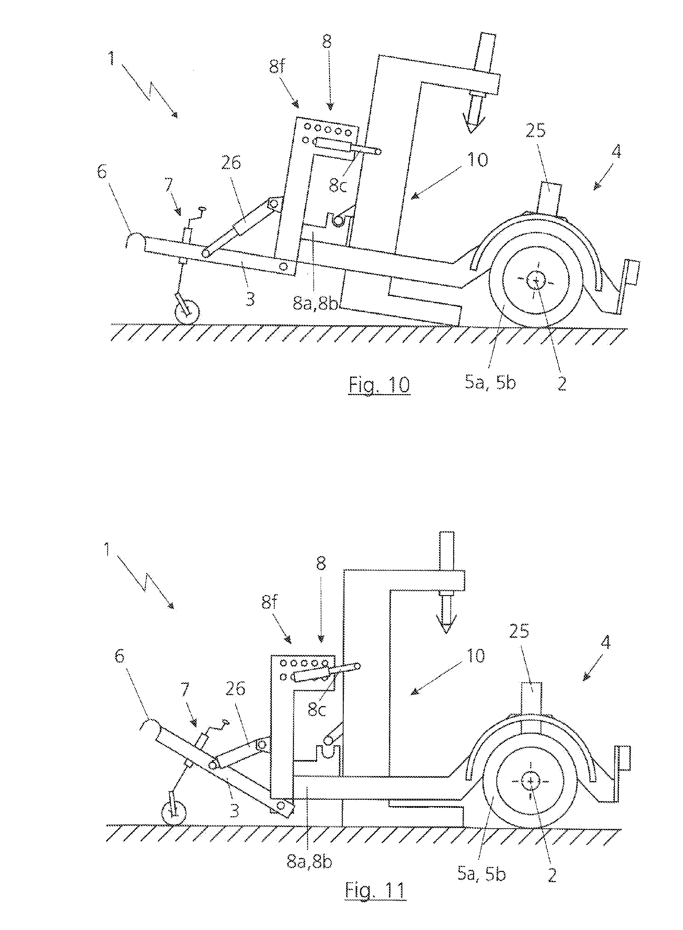

Fig. 10 stellt in einer schematischen Darstellung die Ausführungsform aus Fig. 8 dar, wobei hier ein erster Absenkschritt des Transportanhängers 1 zu erkennen ist. Dabei wird der U-förmige Grundrahmen 4 durch Betätigung der Hydraulikzylinder 25 abgesenkt. Der beispielhaft gezeigte Holzspalter 10 berührt in dieser schematischen Darstellung die Ebene, auf dem der Transportanhänger 1 steht.

Wie in Fig. 11 schematisch dargestellt, wird bei einem weiteren Absenkschritt des Transportanhängers 1 der Hydraulikzylinder 26, der mit der Zugdeichsel 3 verbunden ist, eingefahren. Dadurch wird der hier dargestellte Holzspalter 10 auf die Ebene, auf dem der Transportanhänger 1 steht, vollständig abgesenkt. Außerdem ist durch das Absenken der gezeigte Holzspalter 10 aus dem Unterlenker 8a, 8b ausgeklinkt, so dass in einem weiterem nicht näher dargestellten Schritt der Transportanhänger 1 im Wesentlichen durch ein Vorwärtsbewegen desselben von dem gezeigten Holzspalter 10 getrennt werden kann.

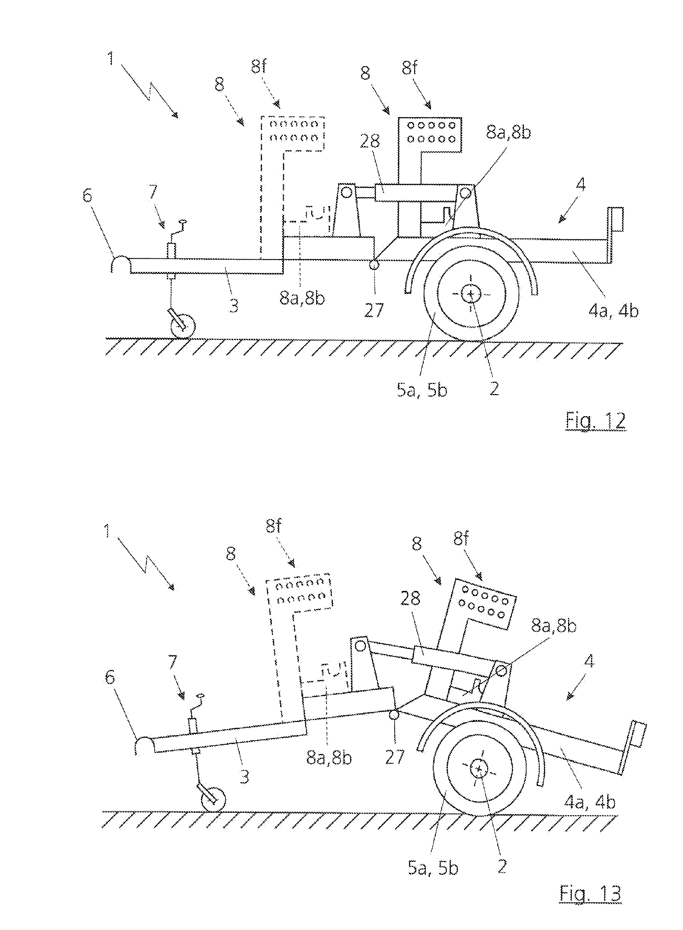

In Fig. 12 ist eine weitere Ausführungsform des erfindungsgemäßen Transportanhängers 1 gezeigt. Ein Arbeitsgerät, wie beispielsweise der Holzspalter 10, ist hier nicht abgebildet. Die Befestigungsmöglichkeiten für das Arbeitsgerät entsprechen jedoch den in den vorangehenden Darstellungen gezeigten Beispielen. An dem U-förmigen Grundrahmen 4 sind jeweils an den Längsträgern 4a, 4b Drehgelenke 27 angebracht, wodurch die Längsträger 4a und 4b zweigeteilt sind. Mindestens auf einem der Längsträger 4a und 4b ist ein Hydraulikzylinder 28 angebracht, der dazu eingesetzt werden kann, um die Abschnitte der zweigeteilten Längsträger 4a und 4b gegeneinander zu verdrehen. Die Dreipunktanbaueinrichtung 8 ist auf den hinteren Abschnitten der zweigeteilten Längsträger 4a und 4b angeordnet. Alternativ kann die Dreipunktanbaueinrichtung 8 auch auf den vorderen Abschnitten der zweigeteilten Längsträger 4a und 4b angeordnet sein (gestrichelt angedeutet). Dann wird das Arbeitsgerät allerdings in der in Fig. 13 gezeigten Stellung des Transportanhängers 1 transportiert.

Fig. 13 zeigt in einer schematischen Darstellung einen Absenkschritt des in Fig. 12 gezeigten Transportanhängers 1. Der Hydraulikzylinder 28 ist dabei ausgefahren und die jeweiligen zweigeteilten Längsträger 4a und 4b werden zueinander verdreht.

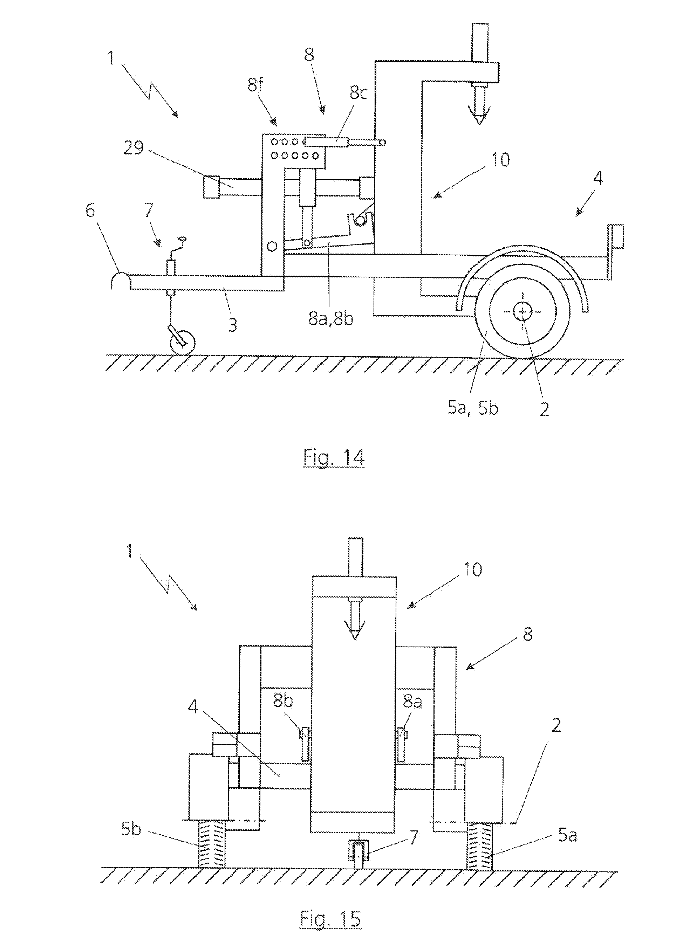

Fig. 14 enthält in einer schematischen Darstellung eine weitere Ausführungsform des erfindungsgemäßen Transportanhängers 1. Bei dem hier dargestellten Arbeitsgerät handelt es sich um einen Holzspalter 10. Der Holzspalter 10 ist zu Antriebszwecken mit einer Gelenkwelle 29 ausgeführt. Die Gelenkwelle 29 kann mit einem externen motorischen Antrieb oder mit einem auf dem Transportanhänger 1 befindlichen motorischen Antrieb, der hier nicht dargestellt ist, verbunden werden.

Wie aus Fig. 15 ersichtlich, kann der Turm der Dreipunktanbaueinrichtung 8 in vorteilhafter Weise zweiteilig ausgebildet sein, um die Gelenkwelle 27 zu dem Holzspalter 10 führen zu können.

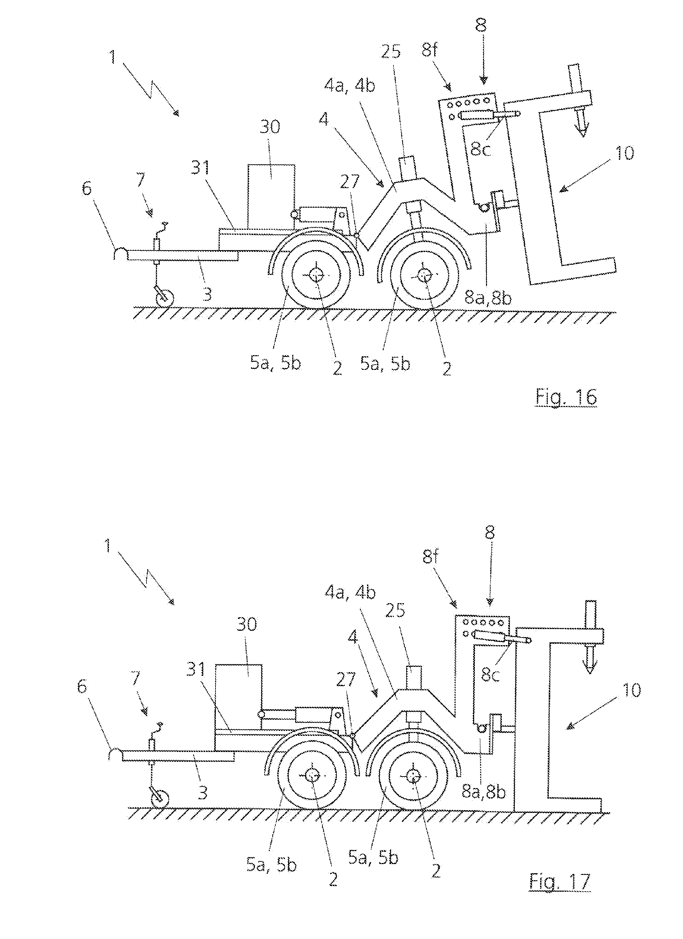

Fig. 16 zeigt in einer vereinfachten Darstellung eine weitere Ausführungsform des erfindungsgemäßen Transportanhängers 1. Der U-förmige Grundrahmen 4 und insbesondere die Längsträger 4a und 4b liegen hier zweigeteilt vor. In einer weiteren Ausführungsform kann der Grundrahmen auch geschlossen sein und somit bei einer hier nicht gezeigten Draufsicht einen rechteckigen Verlauf aufweisen. Eine Drehbewegung der einzelnen Abschnitte der zweigeteilten Längsträger 4a, 4b zueinander ist jeweils über ein Drehgelenk 27 möglich. Der Transportanhänger 1 ist zweiachsig ausgeführt, wobei die Radachsen 2 hier sowohl durchgehend als auch mit zwei hier nicht gezeigten Halbachsen 2a,2b ausgeführt sein können. Die Radachsen 2 sind derart angeordnet, dass beide Abschnitte der Längsträger 4a und 4b durch jeweils zwei Räder 5a und 5b gestützt werden. Die beiden hinteren Räder 5a und 5b sind beispielsweise jeweils mit einem Hydraulikzylinder 25 verbunden, so dass der hintere Abschnitt des Transportanhängers 1 durch eine Betätigung des Hydraulikzylinders 25 angehoben und abgesenkt werden kann. Der Transportanhänger 1 weist außerdem ein Gegengewicht 30, welches auf Schienen 31 gelagert ist, auf. Die Schienen 31 können auch mit einem hier nicht dargstellten Verschiebschlitten oder Stecklöchern versehen sein. Das Gegengewicht 30 kann durch einen hier gezeigten weiteren Hydraulikzylinder 32 oder auch manuell bewegt werden.

Fig. 17 zeigt schematisch den Transportanhänger 1 aus Fig. 16, wobei das Arbeitsgerät, welches in der gezeigten Darstellung beispielsweise ein Holzspalter 10 ist, nach dem Betätigen des Hydraulikzylinders 25 abgesenkt ist. Das Gegengewicht 30 befindet sich in der gezeigten Fig. 17 im Vergleich zu der schematischen Darstellung in Fig. 16 in einer anderen Position.

In weiteren nicht dargestellten Ausführungsbeispielen könnte der Querträger 4c zum Verstellen der Breite des Transportanhängers 1 auch ausfahrbar als Teleskoptraverse ausgebildet sein. Das Verstellen könnte hydraulisch, manuell, über Steckverbindungen / Lochsegmente, Seilzüge, Gewindestangen oder dergleichen erfolgen.

In weiteren nicht dargestellten Ausführungsbeispielen könnte die Dreipunktanbaueinrichtung 8 höhenverstellbar ausgebildet sein. Das Verstellen könnte hydraulisch, manuell, teleskopartig, über Steckverbindungen / Lochsegmente, Seilzüge, Gewindestangen oder dergleichen erfolgen.

Der vorzugsweise hydraulische Antrieb kann einen Benzinmotor, Dieselmotor oder einen, insbesondere solarbetriebenen Elektromotor aufweisen.

### Bezugszeichenliste

- 1: Transportanhänger
- 2: Radachse
- 2a,2b: Radhalbachsen
- 3: Zugdeichsel
- 4: U-förmiger Grundrahmen
- 4a,4b: Längsträger
- 4c: Querträger
- 4d: Rückseite
- 5a,5b: Räder
- 6: Anhängevorrichtung
- 7: Stütze
- 8: Dreipunktanbaueinrichtung
- 8a,8b: Unterlenker
- 8c: Oberlenker
- 8d: Hydraulikeinrichtung
- 8e: Traverse
- 8f: Lochsegment
- 9: Befestigungseinrichtung
- 10: Holzspalter
- 11: Lochsegment
- 12: Trägerprofil
- 13: Klemmvorrichtung
- 14: Kurbelspindel
- 15: Abstellfüße
- 16: Handpumpe
- 17: Scharnier
- 18: Einrichtung zur Aufnahme der Ladeplattform
- 18a: erste Aufnahmeelemente
- 18b: zweite Aufnahmeelemente
- 19: Ladeplattform
- 19a: Aussparungen der Ladeplattform
- 20: Lochplatte
- 21: Verschiebeschlitten
- 22: Steckbolzen
- 23a,23b: Bohrung
- 24: Federstecker
- 25: Hydraulikzylinder
- 26: Hydraulikzylinder
- 27: Drehgelenk
- 28: Hydraulikzylinder
- 29: Gelenkwelle
- 30: Gegengewicht
- 31: Schiene
- 32: Hydraulikzylinder
- d: Abstand

## Patentansprüche

1. Transportanhänger (1) für Kraftfahrzeuge mit wenigstens einer Radachse (2), einer Zugdeichsel (3) und einem mit der Zugdeichsel (3) verbundenen U-förmigen Grundrahmen (4) mit zwei Längsträgern (4a,4b), die wenigstens durch einen vorderen Querträger (4c) miteinander verbunden sind, wobei der U-förmige Grundrahmen (4) auf seiner der Zugdeichsel (3) abgewandten Rückseite (4d) wenigstens während bestimmter Betriebzustände des Transportanhängers (1) offen ist und die wenigstens eine Radachse (2) als jeweils an beiden Längsträgern (4a,4b) gegenüberliegend angeordnete eine oder mehrere Radhalbachsen (2a,2b) aufweist, **gekennzeichnet durch** eine, insbesondere an dem U-förmigen Grundrahmen (4) angeordnete, hebe- und senkbare Dreipunktanbaueinrichtung (8), welche zwei Unterlenkerfanghaken (8a,8b) und einen Oberlenker (8c) aufweist, zum lösbaren Anbau eines mit einer an die Dreipunktanbaueinrichtung (8) angepassten Befestigungseinrichtung (9) versehenen, vorzugsweise land- oder forstwirtschaftlichen, Geräts (10) zwischen den Längsträgern (4a,4b) des offenen U-förmigen Grundrahmens (4).

2. Transportanhänger nach Anspruch 1,
**dadurch gekennzeichnet, dass** dessen Lastverteilung zwischen Heck- und Frontlastigkeit variabel einstellbar ist.

3. Transportanhänger nach Anspruch 1 oder 2,
**dadurch gekennzeichnet , dass** die Position der Unterlenkerfanghaken (8a,8b) der Dreipunktanbaueinrichtung (8), insbesondere mittels eines Lochsegments (11), variabel in Richtung der Längsachse des Transportanhängers (1) einstellbar ist.

4. Transportanhänger nach Anspruch 1, 2 oder 3,
**dadurch gekennzeichnet, dass** die Position der Radhalbachsen (2a,2b) auf den Längsträgern (4a,4b) des U-förmigen Grundrahmens (4) jeweils variabel in Richtung der Längsachse des Transportanhängers (1) einstellbar ist.

5. Transportanhänger nach einem der Ansprüche 1 bis 4,
**dadurch gekennzeichnet, dass** die Radhalbachsen (2a,2b) jeweils mittels eines Trägerprofils (12) über eine Klemmvorrichtung (13) oder mittels eines Verschiebeschlittens (21) über Steckbolzen (22) und entsprechende angepasste Bohrungen (23a,23b) auf den Längsträgern (4a,4b) des U-förmigen Grundrahmens (4) lösbar fixierbar sind.

6. Transportanhänger nach Anspruch 5,
**dadurch gekennzeichnet, dass** die Trägerprofile (12) mittels einer Kurbelspindel (14) oder hydraulisch auf den Längsträgern (4a,4b) des U-förmigen Grundrahmens (4) verschiebbar und insbesondere mittels Schrauben lösbar fixierbar sind.

7. Transportanhänger nach einem der Ansprüche 1 bis 6,
**dadurch gekennzeichnet , dass** die Dreipunktanbaueinrichtung (8) an die Befestigungseinrichtung (9) des land- oder forstwirtschaftlichen Geräts (10) anpassbar ist.

8. Transportanhänger nach einem der Ansprüche 1 bis 7,
**dadurch gekennzeichnet, dass** der Abstand (d) zwischen den an einer, vorzugsweise mit dem U-förmigen Grundrahmen (4) verbundenen Traverse (8e) angeordneten Unterlenkerfanghaken (8a,8b) der Dreipunktanbaueinrichtung (8) horizontal in einer Richtung senkrecht zur Längsachse des Transportanhängers (1) variabel einstellbar ist.

9. Transportanhänger nach einem der Ansprüche 1 bis 8,
**dadurch gekennzeichnet , dass** der offene U-förmige Grundrahmen (4) wenigstens eine Einrichtung (18) zur Aufnahme einer, insbesondere kippbaren Ladeplattform (19) oder einer mit der Ladeplattform (19) verbindbaren Aufnahmeeinrichtung aufweist.

10. Transportanhänger nach einem der Ansprüche 1 bis 9,
**dadurch gekennzeichnet , dass** die Dreipunktanbaueinrichtung (8) wenigstens teilweise wegklappbar oder abklappbar ausgebildet ist.

11. Transportanhänger nach einem der Ansprüche 1 bis 10,
**dadurch gekennzeichnet , dass** das land- oder forstwirtschaftliche Gerät ein Holzspalter (10) oder eine Brennholzkreissäge ist.

12. Transportanhänger nach einem der Ansprüche 1 bis 11,
**dadurch gekennzeichnet , dass** die Dreipunktanbaueinrichtung (8) mittels einer Hydraulikeinrichtung (8d) mit einfacher oder doppelter Wirkrichtung, vorzugsweise manuell, insbesondere über eine Handpumpe hebe- und senkbar ist.

13. Transportanhänger nach einem der Ansprüche 1 bis 12,
**dadurch gekennzeichnet, dass** die Position des Oberlenkers (8c) der Dreipunktanbaueinrichtung (8), insbesondere mittels eines zusätzlichen Lochsegments (8f), variabel einstellbar ist.

14. Transportanhänger nach einem der Ansprüche 1 bis 13,
**dadurch gekennzeichnet, dass** ein Turm der Dreipunktanbaueinrichtung (8) zweiteilig ausgebildet ist.

15. Transportanhänger nach Anspruch 1,
**dadurch gekennzeichnet, dass** der U-förmige Grundrahmen (4), insbesondere die Längsträger (4a,4b), vorzugsweise mittels eines Drehgelenks (27), zweiteilig ausgebildet ist.
